Europäisches Patentamt

European Patent Office

Office européen des brevets

(11) Publication number: 0 375 669
A2

# EUROPEAN PATENT APPLICATION

(21) Application number: 90200114.8

(51) Int. Cl.⁵: **G02B 6/38**

(22) Date of filing: 29.05.85

This application was filed on 17 - 01 - 1990 as a divisional application to the application mentioned under INID code 60.

(30) Priority: 08.06.84 US 618851
17.05.85 US 734831

(43) Date of publication of application:
**27.06.90 Bulletin 90/26**

(60) Publication number of the earlier application in accordance with Art.76 EPC: **0 183 820**

(84) Designated Contracting States:
**CH DE FR GB IT LI SE**

(71) Applicant: **AMP INCORPORATED**
**480 Friendship Road**
**Harrisburg Pennsylvania 17105(US)**

(72) Inventor: **Stape, William Joseph**
**2111 Bellevue**
**Harrisburg, Pennsylvania 17105(US)**
Inventor: **Weber, Robert Ney**
**29 South Railroad Street**
**Hummelstown, Pennsylvania 17036(US)**

(74) Representative: **Warren, Keith Stanley et al**
**BARON & WARREN 18 South End Kensington**
**London W8 5BU(GB)**

(54) **Simplex fiber optic cable terminal carrier.**

(57) A simplex fiber optic cable carrier comprises a body (650) having a flat base and forwardly projecting cantilever latching arms (653) attached to the body (650) and each having a forwardly tapered lug (654) at its distal end. On each side of the body (650) is a spring clip (651,652) for clipping to a simplex fiber optic terminal (661,662) terminating a fiber end.

FIG. 21B

EP 0 375 669 A2

## SIMPLEX FIBER OPTIC CABLE TERMINAL CARRIER

This invention relates to a simplex fiber optic cable terminal carrier for carrying at least two simplex terminals for the interconnection of fiber optics cables.

According to the invention claimed in EP-A-0 183 820 from which the present invention is divided, a fiber optics connector assembly for mating an optical fiber of a first fiber optic cable with a like optical fiber of a second optic cable with maximum axial alignment of the respective mated fibers, is characterized by:
a plurality of ferrules, each of which receives a respective optical fiber therein;
a connector for each cable, each connector having a housing receiving therein a ferrule attached to a fiber associated with a respective cable; and
an interconnect member having opposed cavities receiving respective connectors, passageways interconnecting respective cavities, and receptors mounted in each passageway, with each receptor having a profiled bore receiving a ferrule in each of the opposite ends thereof and an outer profile allowing movement about the geometric center of the receptor so as to axially align the bores of the ferrules received therein.

The art of electrical connectors is well advanced and facilitates a wide range of connections between equipment and signal carrying electrical cables in assorted combinations. A like facility is not presently available to use with fiber optic cables. A need exists, therefore, for fiber optic connectors that will permit inexpensive, quick, easy and reliable connections between fiber optic cables, between pieces of equipment utilizing fiber optics and, for convenience, wall-socket type connectors to permit ready access to data transmitted via fiber optic cables to homes and offices.

For convenient handling of simplex, i.e., single fiber, terminal ferrules to be connected to interconnect housings mounted on printed circuit boards and the like, the present invention consists in a simplex fiber optic cable terminal carrier for carrying at least two simplex terminals for the interconnection of fiber optics cables; characterized by; a body on a substantially flat base; a forwardly cantilevered latching arm attached to said body and being provided with a forwardly tapered lug at its distal end; and springy clip means attached to two opposite sides of the body and being shaped and sized internally for firmly clipping therein simplex fiber optical terminals terminating fiber ends in individual forwardly directed ferrules.

Thus two such terminals can be securely lodged together on the carrier and the carrier pushed into a tailgate housing for interconnection with mating cables, e.g., by a duplex connector, with ferrule-alignment obtained via ferrule aligning receptors as discussed above.

For a better understanding of the invention reference will now be made by way of example to the accompanying drawings, in which:

Figure 1 is a perspective view of a fiber optic connector system in a fully assembled condition;

Figure 2 is a perspective view of the fiber optic connector system of Figure 1, with two of the mating connectors exploded therefrom;

Figure 3 is an exploded perspective view of a duplex fiber optic connector;

Figure 4 is an exploded perspective view of a simplex or single fiber connector;

Figure 5 is a perspective view, partially exploded and partially in section, showing the details of an interconnect housing;

Figure 6 is a perspective view, partially in section, taken from the opposite direction of Figures 1 and with one single cable connector exploded therefrom;

Figure 7 is a longitudinal section taken along line 7-7 of Figure 1;

Figure 8 is another longitudinal section taken along line 8-8 of Figure 1;

Figure 9 is an enlarged section, similar to Figure 7, showing the connectors in an unmated condition;

Figure 10 is an enlarged section, similar to Figure 9, showing the connectors in a mated condition;

Figure 11 is an enlarged detailed section similar to Figure 8;

Figure 12A illustrates one variation of a heavy-duty strain relief. Figures 12B and 12C are the side elevation and longitudinal cross-sections, respectively, of a modified version of this heavy-duty strain relief.

Figure 13 is an external perspective view of a high-profile panel-mount fiber optic interconnect tailgate housing with a dirt and dust excluding door.

Figure 14A and 14B are the side elevation and longitudinal cross-section, respectively, of a ferrule-aligning bushing with an exterior toadstool shape profile. Figure 14C is an end view of the same bushing.

Figures 15A and 15B are the side elevation and longitudinal cross-section, respectively, of a modified version of the bushing of Figures 14A and 14B. Figure 15C is and end view showing an axially aligned split along one side of the modified bushing.

Figures 16A-16C are exterior perspective views of the bottom half of a panel-mount tailgate for a duplex-to-two-simplex fiber optic interconnect housing, with toadstool type support for ferrule-aligning bushings.

Figure 17A and 17B are exterior perspective views of the top half of the panel-mount tailgate whose bottom half is illustrated in Figures 16A-16C.

Figures 18A and 18B are horizontal and vertical sectional views, respectively, of a wall-mounted tailgate without a dirt and dust excluding door.

Figures 19A and 19B are horizontal and vertical sectional views, respectively, of a wall-mounted tailgate housing provided with a dirt and dust excluding door.

Figures 20A and 20B show a variation of the tailgate housing of Figures 18A and 18B with a different structure to receive two simplex connectors.

Figures 21A-21C are perspective views of a first embodiment of a simplex cable terminal carrier according to the present invention into which are clipped simplex connectors for attachment to a wall mounted tailgate.

Figures 22A and 22B are partial horizontal and vertical sectional views of a wall-mounted tailgate providing interconnection between a duplex cable and two simplex cables clipped into a simplex terminal carrier like the one shown in Figures 21A-21C.

Figures 23A and 23B are perspective views of a second embodiment of a simplex terminal carrier according to the invention.

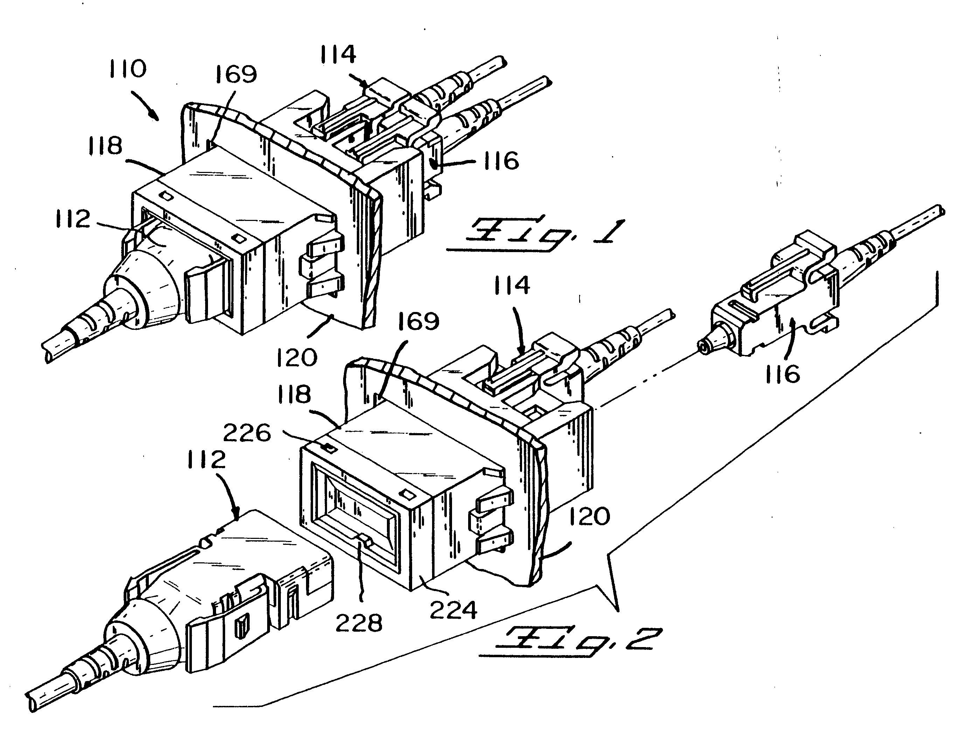

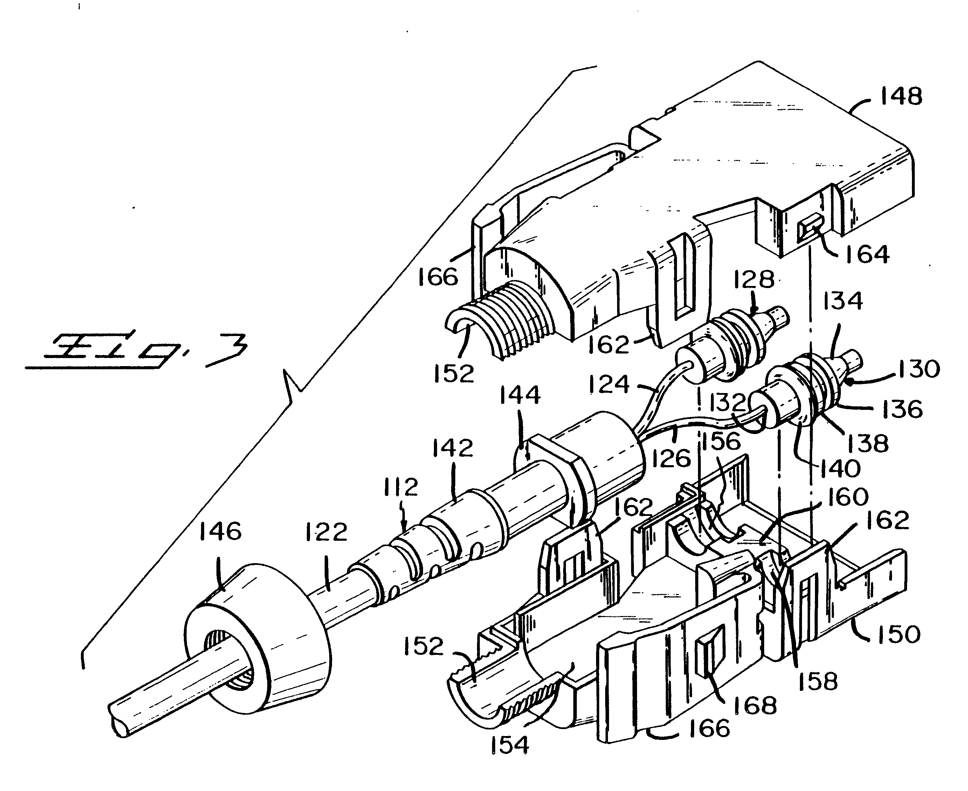

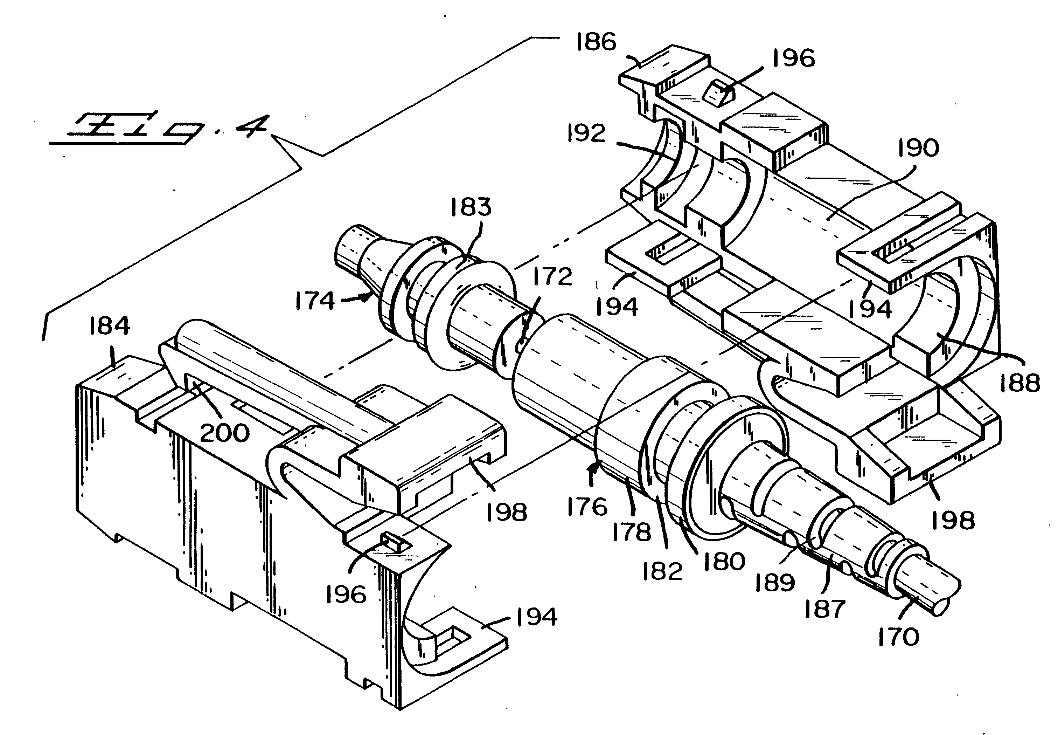

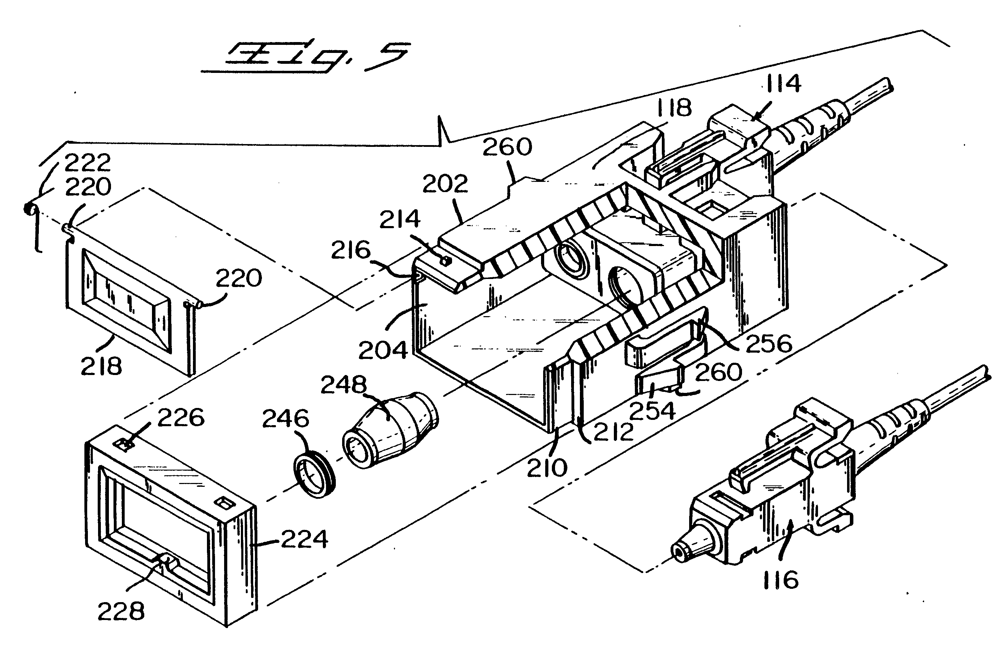

Figures 1 to 20B illustrate examples which are useful for an understanding of the present invention.

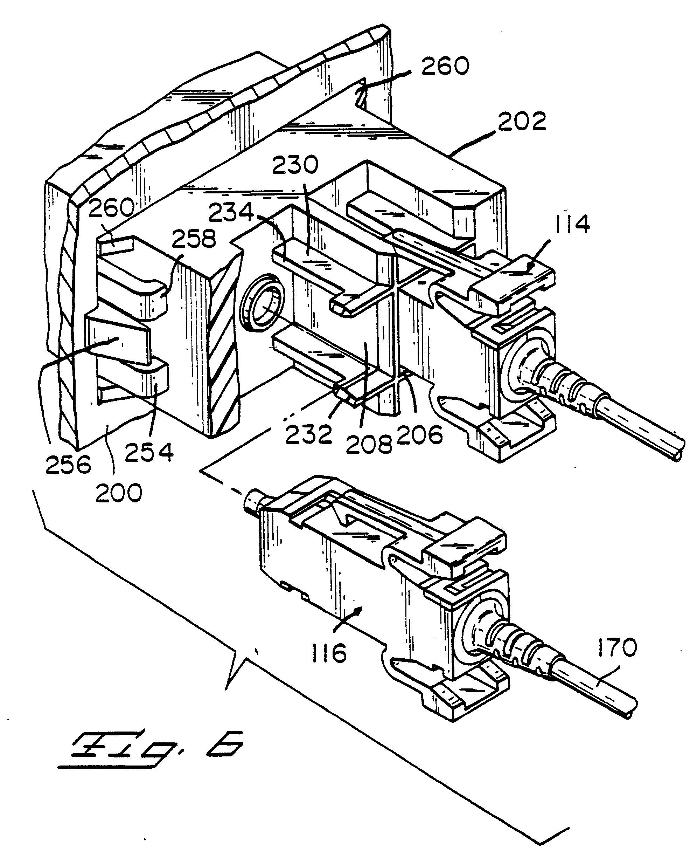

In a fiber optic interconnect apparatus shown in perspective view in Figures 1 and 2, the duplex fiber optic connector 110 comprises a duplex cable connector 112 and a pair of single cable, i.e., simplex, connectors 114, 116, all mating with an interconnect housing member 118 mounted in a suitably shaped aperture 169 in bulkhead 120.

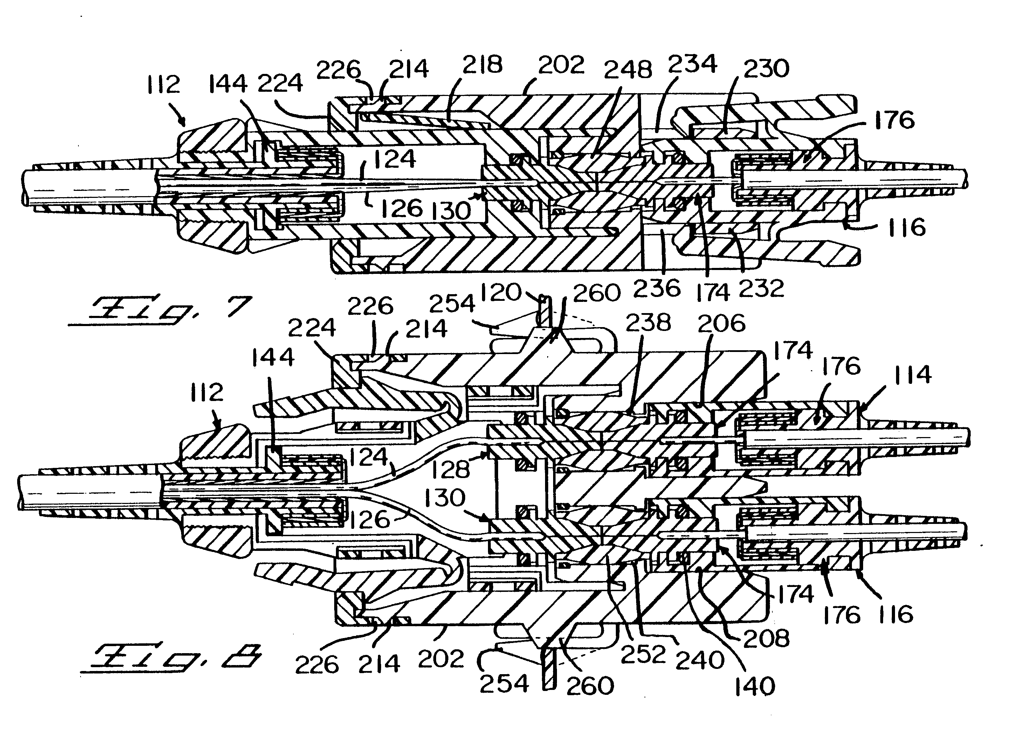

Considering the duplex cable connector 112 first, and referring to Figure 3, the fiber optic cable 122 is of known construction and is provided with a pair of fibers 124, 126, each of which is terminated by separate ferrules 128, 130. The ferrules 128, 130 are preferably formed of plastics material and each has a fiber receiving axial bore 132, a profiled nose 134, a pair of annular flanges 136, 138 and an O-ring 140. The cable 122 is provided with a strain relief 142 having an integral annular flange 144 and a nut 146. The duplex connector 112 comprises a pair of hermaphroditic cover members 148, 150 which fit together to define an externally threaded cable entry 152, a central cavity 154, a pair of profiled passages 156, 158 and a mating face 160. The cover members 148, 150 are provided with interengaging latches 162 and lugs 164, and also include latching arms 166 which have outwardly directed latching lugs 168.

A single fiber connector, i.e., a simplex connector, is shown in detail in Figure in with a cable 170 having a single fiber 172 terminated by a ferrule 174 which is identical to the ferrules 128, 130 previously described. The cable 170 also is provided with a strain relief 176 having integral annular flanges 178, 180 defining a recess 182 therebetween. A housing is formed by a pair of mating hermaphoditic cover members 184, 186 which together define a profiled cable entry 188, a central cavity 190, profiled passage 192, interengaging latches 194, and lugs 196. Each cover member also has a pivotal latching arm 198 with an inwardly directed latching shoulder 200.

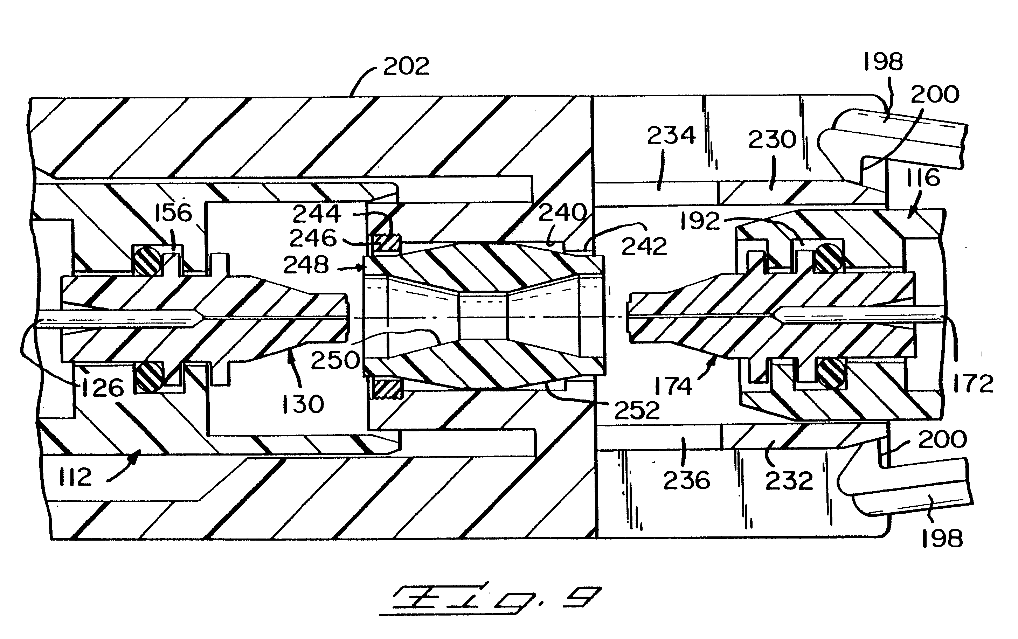

The interconnect member 118 can best be understood from Figures 5 to 8. The interconnect member 118 has a housing 202 defining a first cavity 204 and oppositely directed second and third cavities 206, 208. The first cavity 204 is profiled to receive the duplex connector 112 therein and has a stepped annular flange 210 at its open end defining an outwardly directed annular shoulder 212, outwardly directed integral lugs 214, and oppositely spaced inwardly directed recesses 216. A door 218 is mounted across the opening of the first cavity 204 with pivots 220 received in respectively recesses 216. At least one spring 222 is mounted on one of the pivots 220 to bias the door to a closed position. An annular member 224 is mounted on the stepped flange 210 with lugs 214 engaging apertures 226 to secure it in place. The member 224 serves to retain and stop door 218, as engagement for the latching lugs 168 of the duplex connector 112, and is provided with a polarizing and/or keying projection or lug 228.

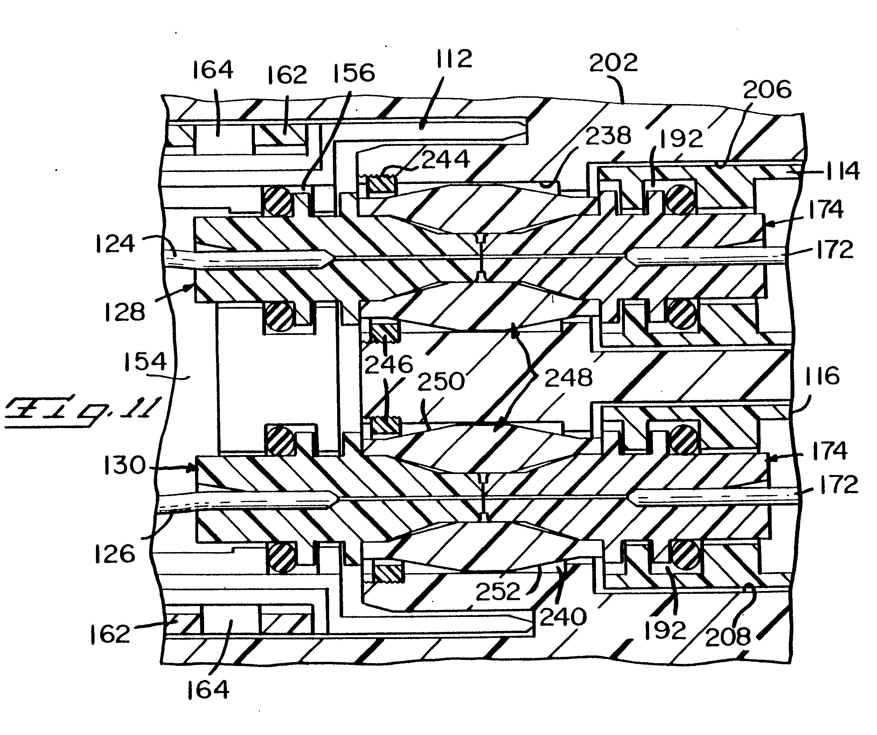

The second and third cavities 206, 208 are each profiled to receive a respective single fiber connector. e.g. 114, 116, therein. Each cavity 206, 208 has opposite spaced sidewalls 230, 232 having therein apertures 234, 236 aligned to receive the latching shoulders 200 of the latching arms 198 of the respective single fiber connectors 114, 116. The first cavity 204 is connected to the second and third cavities 206, 208 by passages 238, 240, respectively. Each passage 238, 240 (see Figures 9 to 11) is provided with an inwardly directed flange 242 on a first end and an internally threaded portion 244 on the opposite end which receives an exteriorly threaded nut 246 therein.

A receptor 248 is mounted in each passage 238, 240 and held therein by flange 242 and nut 244. The receptor 248 has a profiled axial bore 250 and a profiled exterior surface 252. The profiled bore 250 receives the fiber carrying ferrules 130, 174 in opposite ends thereof and the profiled exterior 252 allows the receptor 248 to pivot about its geometric center to accommodate for any misalignment of the ferrules 130, 174.

The housing 202 is completed by a plurality of mounting arms 254, 256, 258 which are similar to the mounting arms shown in U.S. Patent Number 3,989,343, the, disclosure of which is incorporated herein by reference, and by alignment lugs 260.

The subject system is assembled by first terminating each fiber 124, 126, 172 with a respective ferrule 128, 130, 174. This is done in the well-known fashion of stripping the cladding from the fiber, inserting the fiber through the bore of the ferrule, securing it in place by adhesive means, cutting and polishing the end of the ferrule and fiber to get a smooth planar surface. The cables 122, 170 are then placed in their respective covers 148, 150 and 184, 186, respectively, with the ferrules 128, 130, 174 received in the profiles 156, 158, 192, the flanges 136, 183 generally positioning the ferrules and the O-rings 140 allowing for a resilient or somewhat floating mount when the covers are closed. The flange 144 engages the end of the cavity 154 (see Figure 3) and the flanges 178, 180 grip the profiled entry 188 to provide strain relief for the cables 122, 170. The covers are secured together by engaging the latches 162, 194 on their respective lugs 164, 196. Gable nut 146 is applied to the threaded entry 152.

The interconnect member 118 is assembled by first inserting the receptors 248 into their respective passages 238, 240 and securing them in place by the nuts 246. The interconnect member 118 is then mounted in an aperture 169 of a panel or bulkhead 120. Due to the arrangement of the latching arms 254, 256, 258, the interconnect member 118 can be inserted from either side of the bulkhead 120. It is generally, centered by the lugs 260.

Mating of the connectors 112, 114, 116 is achieved simply by applying the duplex connector 112 to open door 218 to be received in the cavity 204, and the single connectors 114, 116 being latched into the cavities 206, 208. The latching arms 166, 198 of the connectors engage with the housing 202 to secure the connectors in place.

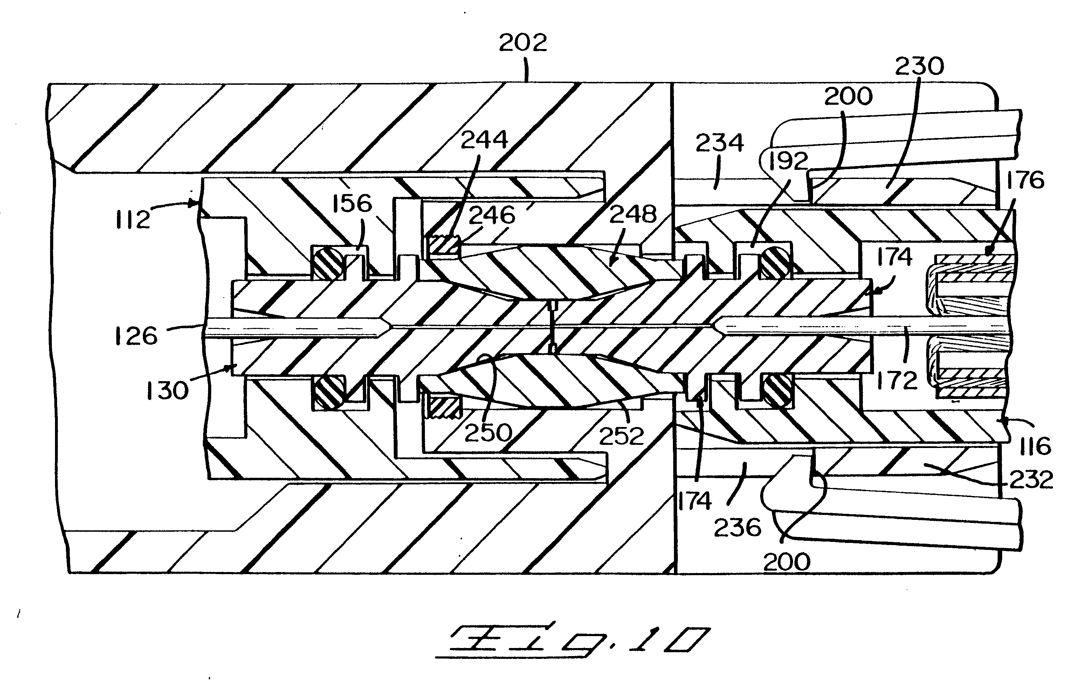

It will be appreciated from Figures 7 through 11 that the receptor 248 is free to move, and in combination with the limited float of the respective ferrules it will cause each interconnecting pair of the ferrules to assume an axially aligned condition.

The normal mounting of the interconnect member 118 is with the duplex portion to the outside of a cabinet or module. Door 218 is provided on this end of member 118 to keep ambient dust from entering the interface area and detracting from the effectiveness of the coupling.

In enhancing the facility with which fiber optic connectors may be utilized, particularly by rendering fiber optic cables easy to plug in and out of interconnectors much the way electrical extension cords are freely utilized; it is inadvisable to allow a fiber optic cable to be bent to such a small radius that the resultant physical strain causes actual physical damage to the individual optical fibers. Thus, for example, as depicted in Figure 4, strain relief 176 comprises a tapered cylindrical flexible end 187 provided with alternate staggered, oppositely-located partial cuts 189 which, in effect, provide flexible stiffening of the outer sheath of cable 170 where it enters strain relief 176. While this may suffice for careful use under many circumstances, it may not be sufficient protection against the cable bending to too small a radius under all circumstances of use.

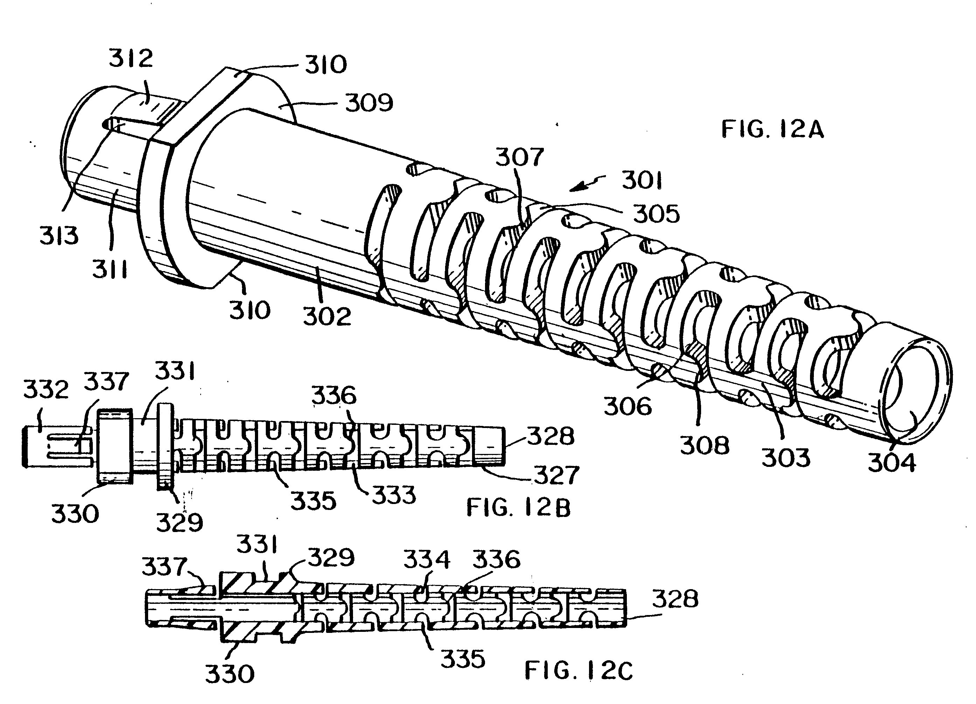

Figures 12A-12C illustrate an alternative embodiment which provides heavy duty protection against bending of the fiber optic cable to unacceptably small radii due to externally encountered physical loads. Such a heavy duty strain relief 301 has a short generally right-cylindrical end portion 311, a short flange 309 provided with oppositely located flats 310 and 313, followed by a generally cylindrical portion 302 which ultimately tapers towards the other end. A cylindrical bore 304 axially aligned through 301 is sized to comfortably accommodate the exterior diameter of a fiber optic cable such as 170. Overlapping, alternately positioned, staggered series of openings 305 and 306 are provided in the tapered portion of strain relief 301 to allow greater flexibility in that portion thereof. However, to ensure that the tapered portion and individual optical fibers contained therewithin will not be bent to too small a radius, each cut is provided with a generally semi-circular mid-position internal side extension of predetermined size on one long side of each of the openings (Figure 12A). Thus extension 307 provided in opening 305 does not extend all the way across the width of the cut. Likewise for semi-circular extension 308 in typical opening 306. The present of these semi-circular extensions 307 and 308 in strain relief 301 allows flexible connection between the cable end and the strain relief while limiting in a predetermined manner, by choice of shape and size of extensions 307 and 308, the minimum radius that the cable can attain due to lateral external forces acting on the cable to bend the tapered portion of strain relief 301. The particular heavy duty strain relief shown in Figure 12A has in the right cylindrical end portion 311 a cantilevered extension 312, within an opening 313 surrounding it on three sides, to permit latching attachment within a suitably sized cylindrical aperture. Such an aperture may be the inside of a cable clamp.

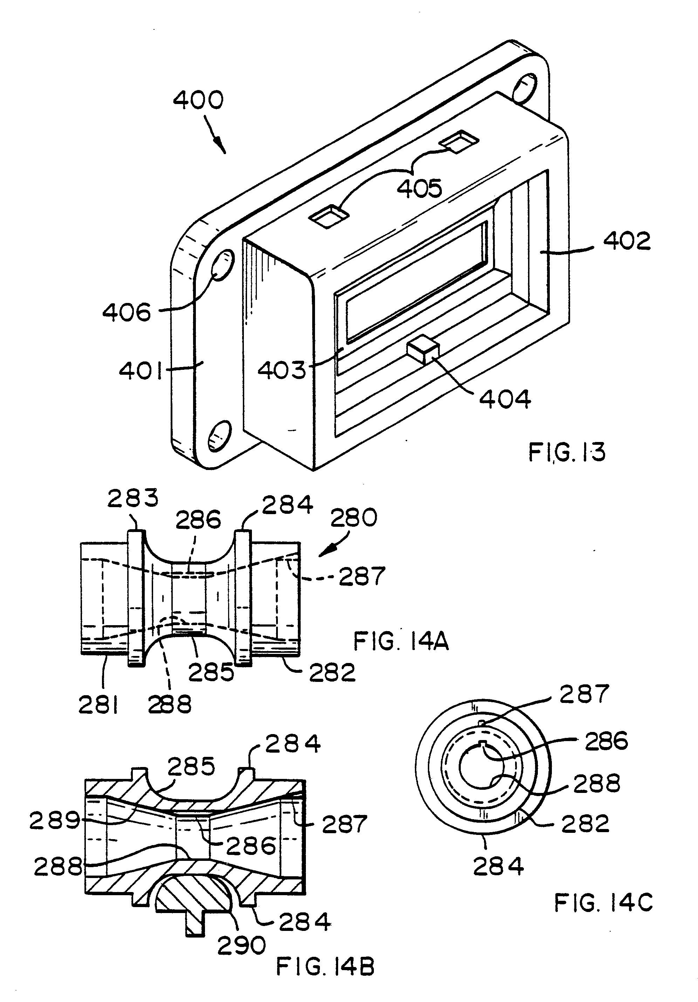

Yet another embodiment employing the extensions within the series of openings, as described in the preceding paragraph, is depicted in Figures 12B and 12C respectively. Thus, in Figure 12B, heavy duty strain relief 326, while generally similar to heavy duty strain relief 301, has flanges 329 and 330 separated by a short right cylindrical portion 331. Details of the cantilevered extensions 337 are clearly seen in Figures 14B and 14C. Here again, cylindrical bore 328 through strain relief 326 comfortably accommodates a fiber optic cable passing therethrough. Extensions 335 and 336, in cuts 333 and 334 respectively, serve to provide a predetermined limitation to the smallest radius that can be taken up by a cable passing through the strain relief when subjected to lateral externally applied forces.

In an alternative form of the above described interconnect device, as best seen in Figure 13, external lugs 256, 254 and 260 are eliminated from the housing cover members of the interconnect device. Likewise, annular member 224 is eliminated and in its place is provided an external cover 400 as shown in Figure 12. This panel mount interconnect 400 has a flat, generally rectangularly shaped flange 401 and a front rectangular opening 402 in which is provided a pivoting spring-biased door 403 to keep out dust and dirt. A small lug 404 is provided to allow polarization or keying control when duplex connectors are used. Apertures 405 at the top of external cover 400 are positioned so as to latch onto lugs provided in the two halves which together comprise the interconnect member 118. This type of tailgate housing may conveniently be referred to as a high profile interconnect wall mounted tailgate housing. It is mounted to the exterior of a panel 120 by means of bolts or screws passing through apertures 406 provided therefor in flange 401.

The insertion of individual ferrules into bushing 248 (best seen in Figure 5) requires the application of a certain amount of force to ensure proper alignment of mating ferrules held therein. An embodiment of a ferrule-aligning bushing 280 is shown in Figures 14A-14C. Bushing 280 has two right cylindrical ends 281 and 282 and two annular flanges 283 and 284, of somewhat larger diameter. Between flanges 283 and 284, as best seen in Figure 14A, is provided a symmetrical profile 285 similar to that of the curved cross-sectional portion of a toadstool-head shaped encircling support 290. Figure 14B, which depicts bushing 280 in longitudinal cross-section, shows an internal profile of the bore having preferably right cylindrical portions adjacent each end which taper towards a central cylindrical portion 288 of smaller diameter. As best seen in Figures 14B and 14C, a longitudinal cut 286 is provided from one side in the central portion of alignment bushing 280, and another relatively shorter cut 287 is provided at one end. Neither cut extends radially through the wall of bushing 280. Cut 286 relieves the bushing wall thickness and ensures that insertion of a tapered ferrule end from that side will require a lower insertion force than would be the case without this cut 286. The cut is not very deep and the removal of material essentially makes the central portion of bushing 280 somewhat more flexible than was the case without the cut. Cut 287 has a different purpose, namely to provide a relief groove through which air and moisture can flow when ferrules are connected by bushing 280. An annular support, of toadstool cross-section 290, formed as a part of the interior of an interconnect housing, surrounds this central portion of 280 and supports it in a manner that permits it to center itself about its midpoint while accommodating minor imperfections in the molding of inserted ferrule ends from one or both sides.

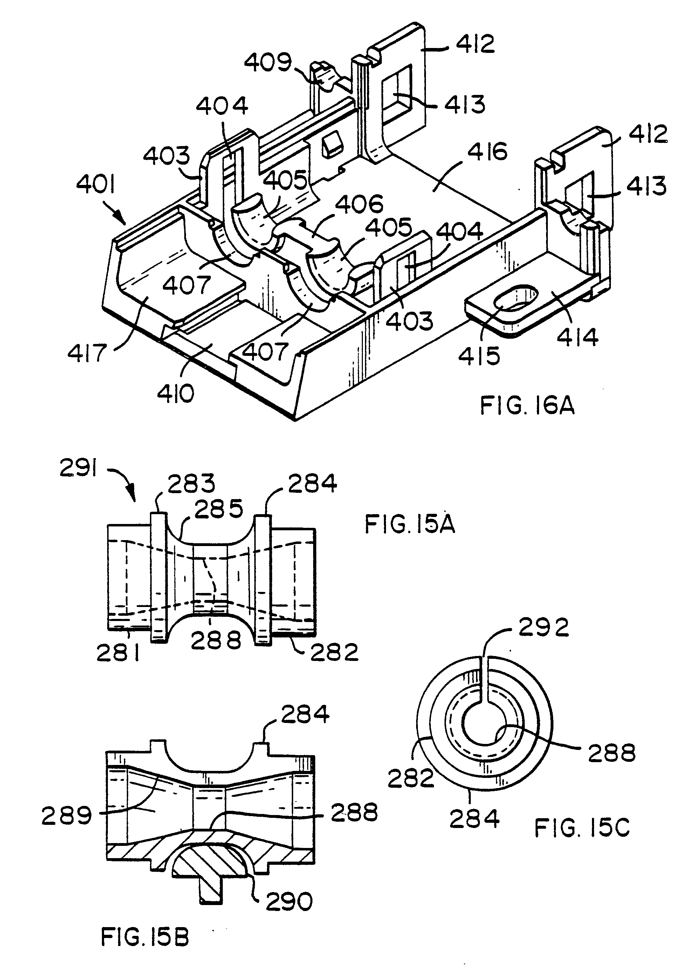

In another embodiment of the toadstool type bushing, 291, best seen in Figures 15A through 15C, a narrow axially aligned cut is made all the way through one side of the bushing. This cut 292 is best seen in Figure 15C. The result is that what was a completely circular bushing now has a split, on one side, aligned with its axis. Cut 292 provides relief to the bushing so that the insertion of ferrules from either or both ends is accomplished with even less force than was the case with the embodiment described immediately above and depicted in Figures 14A-14C.

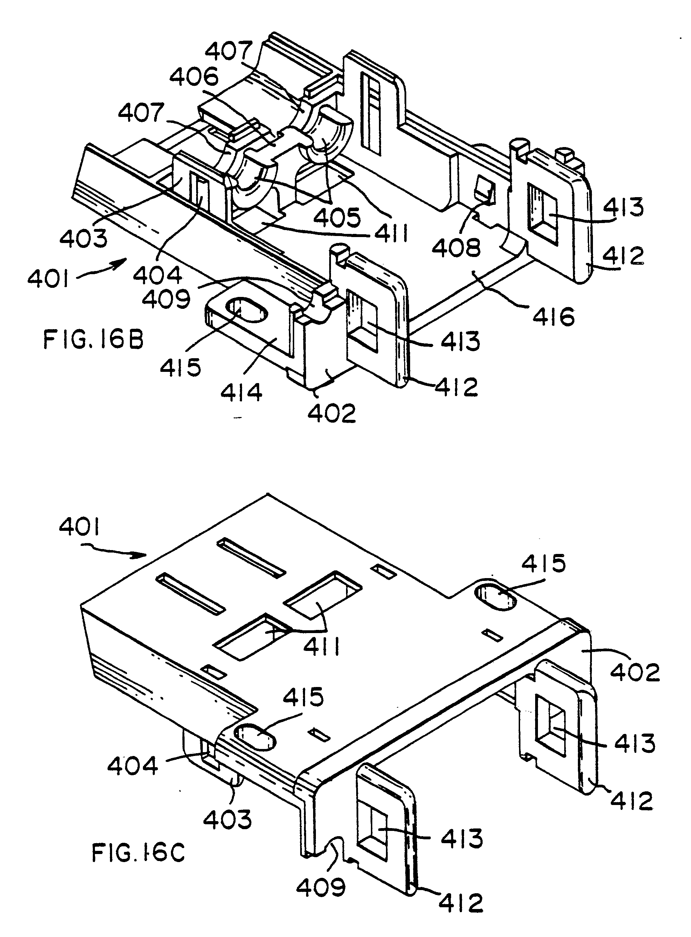

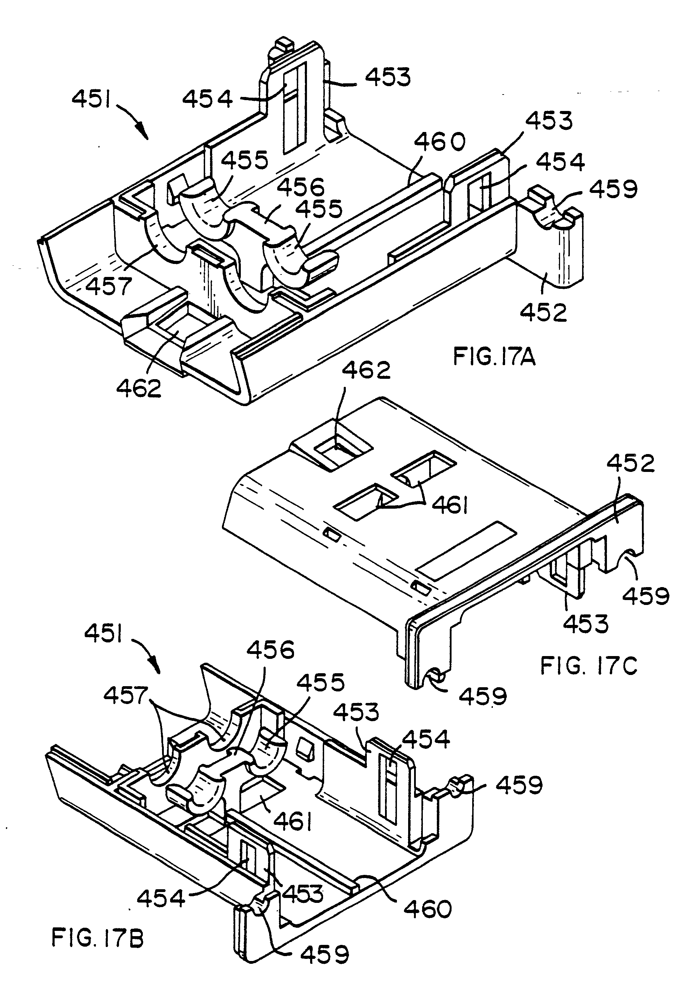

Interconnect member 118 depicted in Figures 1-3 and 5, is designed to operate with ferrule aligning bushings 248 which are threaded in and locked into place by threaded elements 246. As will be recognized by persons skilled in the art, it is necessary to modify the structure within the two hermaphroditic halves 148 and 250 of interconnect member 118, to hold either the type of toadstool supported ferrule aligning bushing depicted in Figures 14A through 14C or the axially split toadstool supported split bushing depicted in Figures 15A through 15C. Such a modified embodiment is shown in Figures 16A-16C and 17A-17C which illustrate the details of the bottom and the top halves, respectively, of an interconnect member suited for use with printed circuit boards (PCB). The PCB mounted interconnect tailgate 400 is formed by the combination of cooperating top and bottom halves 451 and 401 respectively.

Tailgate 400 will serve as a panel or circuit board mounted interconnect member to receive a duplex connector from one side into cavity 416 as seen in Figures 16A and 16B. This would be the side most readily accessible by a user outside of the panel. On the other side of the same panel or circuit board, interconnect housing 400 has a second cavity 417, as seen in Figures 16A and 16B, wherein are received two simplex connectors each carrying a single fiber optic cable for connection with fiber optic cables carried by the duplex connector inserted into first cavity 416. The two interconnecting housing halves 401 and 451 are each provided with interconnecting latches and correspondingly spaced lugs. Thus the bottom half 401 has latches 403 provided with apertures 404, and the top half 451 is provided with latches 453 containing apertures 454 as seen in Figures 17A and 17B.

When the top and bottom halves 451 and 401, respectively, are pressed together, latch 453 engages internal lug 408 and, correspondingly, latch 404 engages internal lug 458. The two halves are thus firmly attached to each other and provide cavities 416 and 417 for the reception of fiber optic connectors inserted from either side. Both the bottom half 401 and top half 451 are provided with structure between said first and second cavities shaped to receive and support two ferrule aligning bushings, such as either 280 or 291 (see Figures 14A-14C and 15A-15C) which have exterior profiles of the toadstool shape. As shown in Figures 16A and 16B, the bottom half 401 of tailgate housing 400 has two semi-cylindrical portions 405 of toadstool cross-section to provide half the needed support for the ferrule aligning bushings. Likewise, as seen in Figures 17A and 17B, the top half 451 is provided with similarly located and identically sized and shaped semi-cylindrical portions 455 to provide the needed second half of the support for the ferrule aligning bushings. The bottom half has a mating surface 406 separating the two toadstool shaped portions 405, and top half 451 as a mating face 456 separating corresponding toadstool support portions 455 respectively. When the top and bottom halves, 451 and 401, are pressed together, these two mating surfaces lie on a common plane. Between the toadstool shaped support 405 and the entrance to the second cavity, in the bottom half 401, there is a wall carrying two adjacent semi-cylindrical profiles 407 to guide the ferrules of the simplex connectors to be inserted into the second cavity. There are corresponding and matchingly located semi-cylindrical profiles 457 in the top half as best seen in Figures 17A and 17B.

As best seen in Figure 16A, bottom half 401 in the central portion of the bottom surface of the second cavity is provided with a shaped recess 410 to receive a carrier (to be more fully described below) that will support two simplex connectors side-by-side for easy insertion and removal within the tailgate housing 400. Bottom half 401 also is provided with two forwardly directed ears 412, each of which is provided preferably with a rectangularly shaped and generally centrally located aperture 413. At right angles to ears 412 and on either side thereof is a partial flange 402. On the other side of flange 402, away from ear 412, on either side of the bottom half is another flat flange 414 provided with an oblong aperture 415. When the two housing halves 401 and 451 are pressed together, therefore, there is created a PCB mounted tailgate interconnect housing with both holes 409 on the outside of ears 412 as well as two horizontally aligned flanges 414 for mounting to the panel circuit board as needed.

Top half 451 is provided with a longitudinally aligned ridge 460 to serve as a keyway for a notch in the duplex connector to be inserted therein. This ridge may be located centrally with respect to the first cavity or may be displaced to the side, as appropriate. Note the centrally located aperture 462 (best seen in Figures 17A and 17C) adjacent the end at which the two simplex connectors are to be inserted, preferably supported by a simplex carrier (discussed below) which latches into aperture 462 for positive holding thereat. For use, therefore, two ferrule-aligning bushings, such as 280 or 291 as desired, are placed onto support portion 405 of the bottom half, and the top half 451 is pressed on thereto. The sizing of support portions 405 and 455, together with the semi-cylindrical portions 407 and 457, respectively, will now ensure that the simplex cables which have ferrules at the ends will enter the bushings on one side while corresponding ferrule ends of a duplex connector will enter from the other side of the bushings. When the ferrule ends are inserted into these bushings, they are firmly aligned with respect to each other while the bushing remains supported with a certain degree of flexibility to move as needed to compensate for any molding imperfections. The assembled tailgate may be inserted through a suitably sized opening in the panel and bolted thereto by bolts inserted through the completed flange comprised of sections 402 and 452. A duplex carrier is preferably inserted from the outside of the circuit panel and a pair of simplex cables may be inserted from the other side of the tailgate housing to couple therewith. Longitudinal ridge 460 formed on the inside of the top half 451 matches in position, shape and size a keyway on one side of the duplex connector. This ensures that the duplex connector can be inserted in only one way, thus ensuring correct polarity at the interconnection. This ridge 460 does not necessarily have to be located centrally with respect to the tailgate top half.

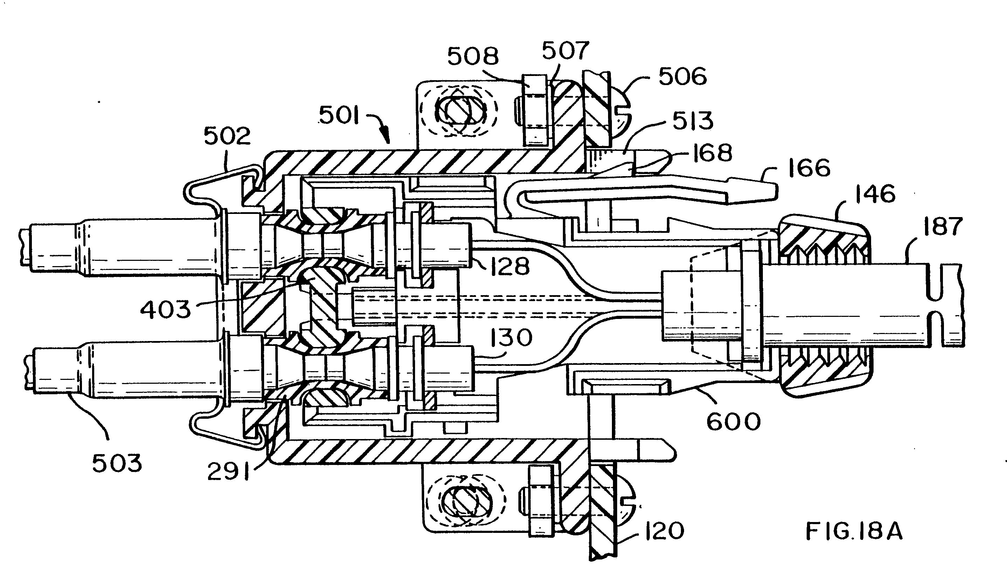

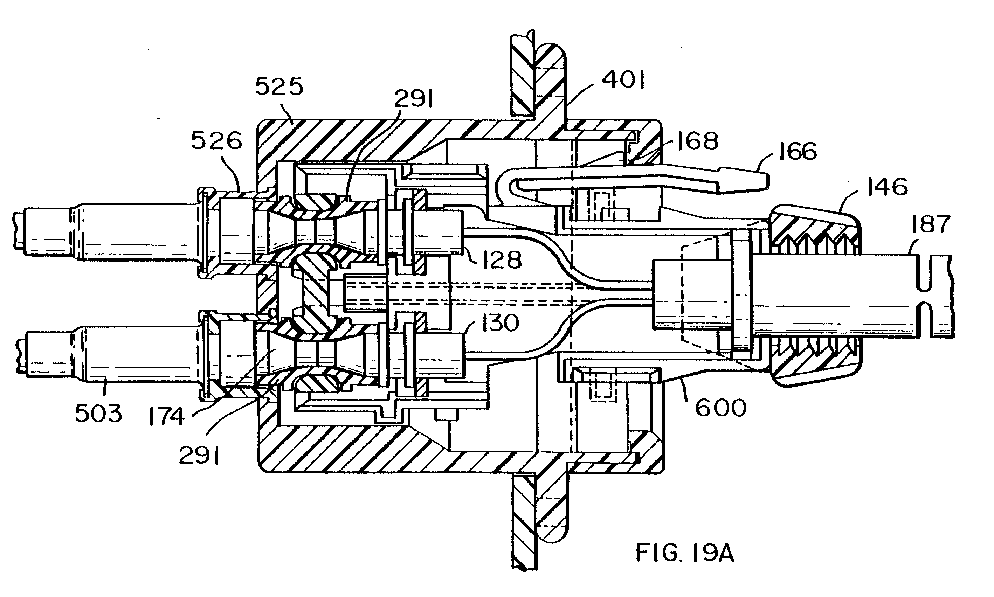

Other embodiments of the wall mounted tailgate structure are shown in Figures 18A, 18B, 19A, 19B, 20A, and 20B.

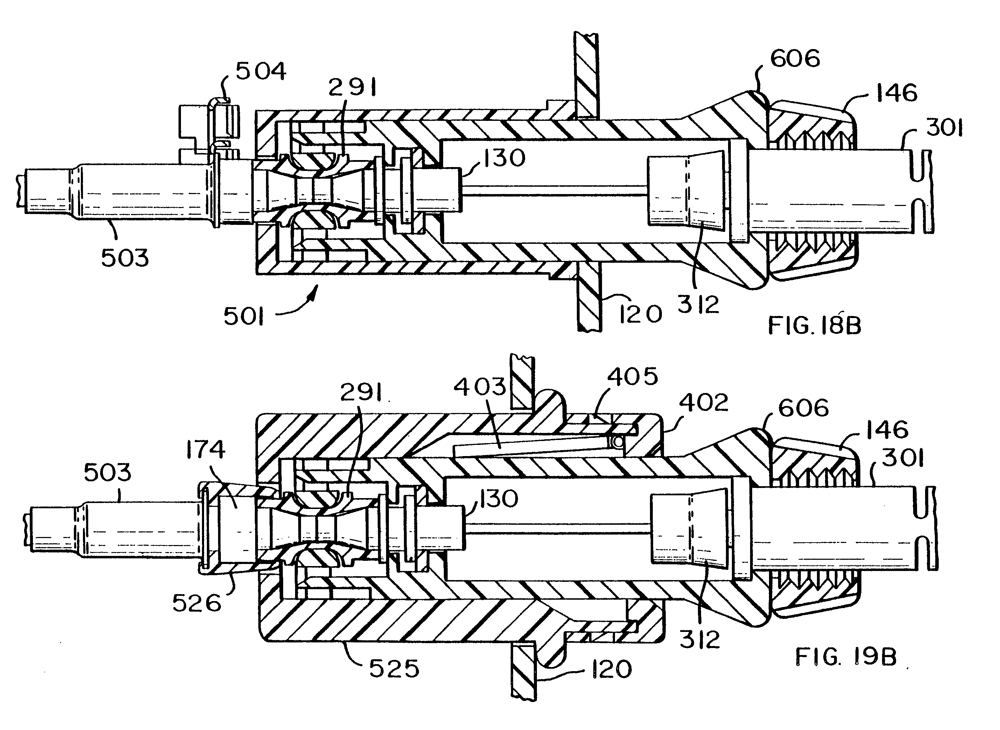

Thus Figures 18A and 18B show a tailgate assembly generally similar to that provided by combining the top and bottom halves of the PCB mounted tailgate shown in Figures 16A-16C and 17A-17C. The principal difference between the tailgate mounting shown in Figures 18A and 18B and the one that would result from combining the elements shown in Figures 16A-16C and 17A-17C is in the rear end thereof. Thus, for wall mounted tailgate 501 of Figures 18A and 18B the end at which simplex connectors are located is shaped to receive a clip 502 which positively engages to the tailgate housing 501 a simplex connector having a ferrule end 174 and an engagement sheath 503. Two such simplex connectors are so connected at one end of the tailgate housing. A duplex connector 600 is inserted from the outside end of the tailgate housing 501 in such a manner that lug 168 engages aperture 513 of the ears of the tailgate housing that stick out outside the printed circuit board or wall 120. Bolts 506, washers 507, and nuts 508 are utilized to mount the tailgate to the wall 120. Ferrules 128 and 130 terminate the two optic fibers of duplex connector 600. The two simplex cable terminations at ferrules 174 are in principle similar, and each is inserted through one end of, preferably, ferrule aligning bushing 291 supported by the toadstood shaped support 403. Ferrules 128 and 130 are inserted from the opposite ends of bushings 291 to be aligned with and interconnected with the simplex connector ferrules 174. Figure 18B indicates further the use of a clip 504 to ensure retention of the simplex connectors in place at the end of tailgate housing 501.

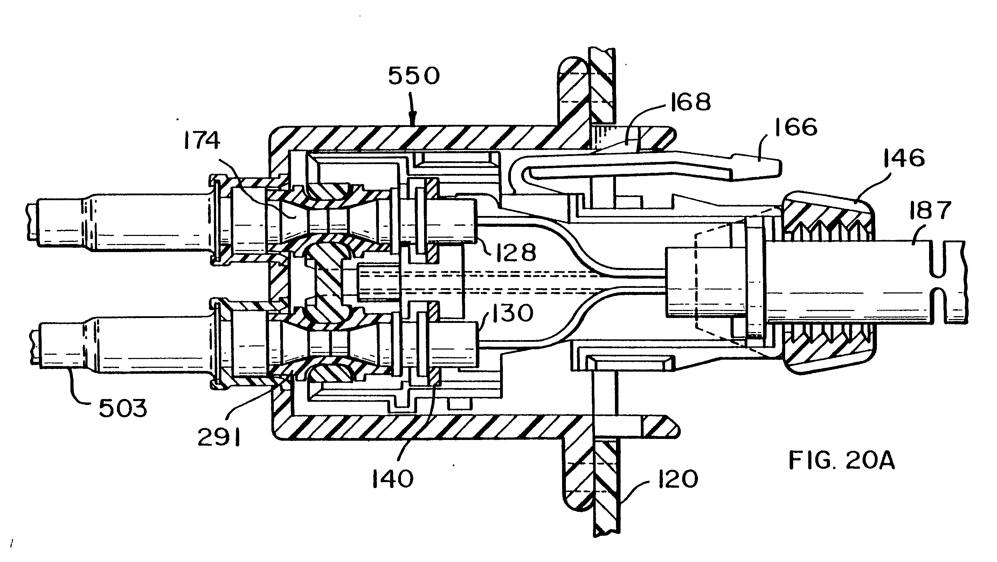

Figures 19A and 19B show a variation of the wall mounted tailgate housing, 525, which is mounted from the outside of wall 120 and also contains a dust and dirt excluding door 403. The general structure of the housing assembly 525 in its essentials is very similar to that depicted in greater detail in Figures 16A-16C and 17A-17C, with the exception of the manner in which the simplex connectors attach to the tailgate. Thus tailgate housing 525 receives simplex ferrules 174 in sheaths 526 that fit into the rear of the tailgate assembly. The tailgate assembly depicted in Figures 18A and 18B is generally known as a low profile tailgate assembly, as contrasted to the high profile tailgate assembly illustrated in Figures 19A and 19B, because much less of its structure sticks outside of the wall to which it is mounted. Figures 20A and 20B illustrate a low profile wall mounted assembly generally similar in its rear structure to that shown in Figures 19A and 19B, with the exception that the assembly shown in Figures 20A and 20B is mounted from the rear of wall 120.

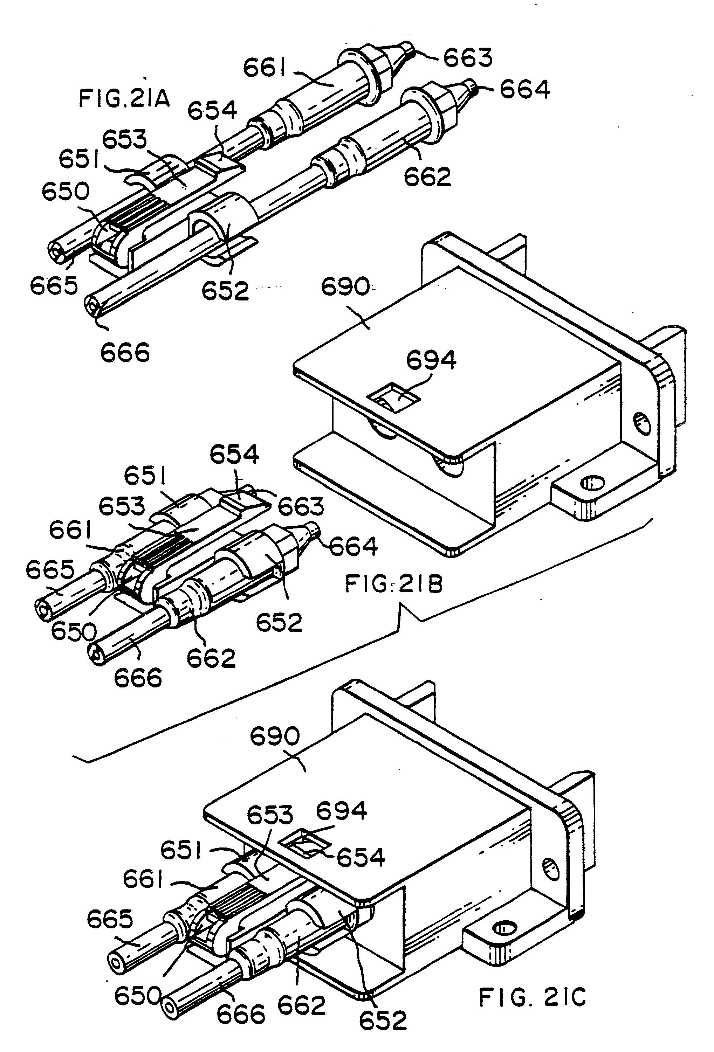

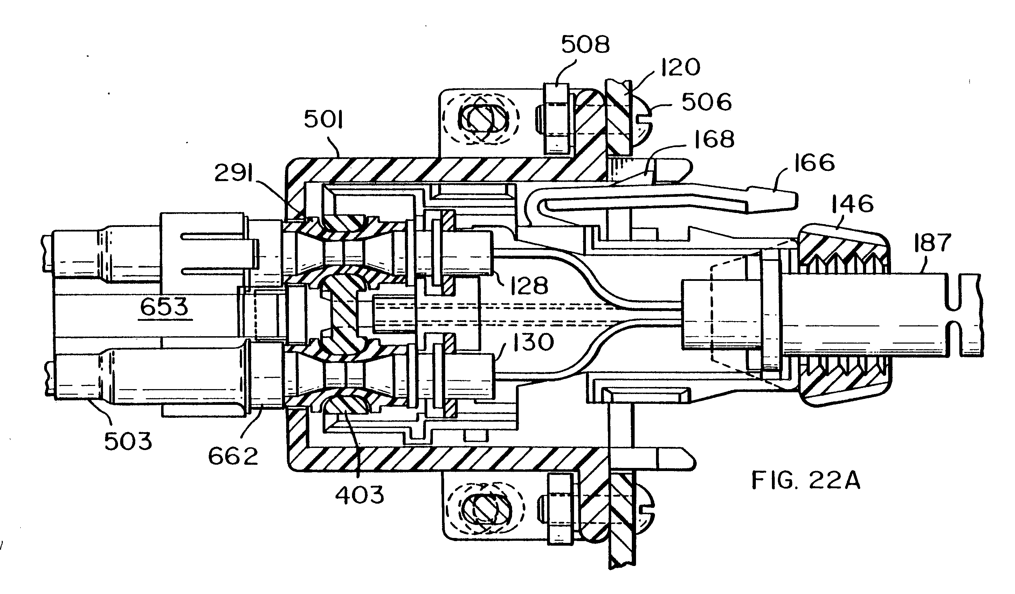

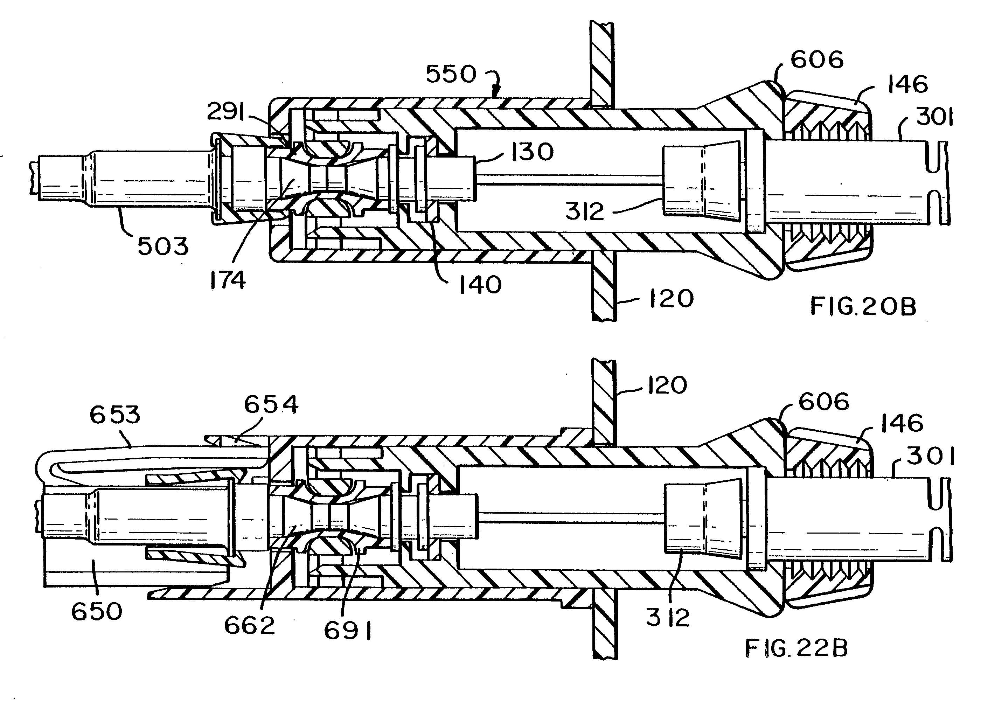

It is unusual in the design of electro-optical equipment that includes printed circuit boards to have much room behind the front panel of the equipment cabinet. Therefore, it is generally quite awkward for a user who wishes to connect or disconnect fiber optic cables to have much room to maneuver. One solution to this problem lies according to the invention in providing a simplex terminal carrier such as 650 shown in Figures 21A-21C. Simplex terminal carrier 650 has a body on either side of which are partial cylindrically shaped clips 651 and 652 respectively. The simplex carrier 650 is also provided with a latching arm 652 that has a lung 653 at the very end. Figures 21A through 21C show the steps involved in utilizing such a simplex terminal carrier, as follows: in Figure 21A are shown two simplex terminals 661 and 662 connected respectively to the ends of single optical fibers 665 and 666 and ending in ferrules 663 and 664 profiled to be inserted into ferrule aligning bushings 291; the cable terminals 661 and 662 are shown clipped into place in the carrier 650 in Figure 21B; the entire assembly, with the simplex terminals 661 and 662 firmly clipped into place into carrier 650 may then be easily grasped by a user and inserted into the rear of a tailgate housing 690. Lug 654 latches into a suitably shaped aperture 694 and tailgate housing 690. When the simplex carrier is to be removed from engagement with the tailgate 690, the user merely presses down ward on latching arm 653 to disengage lug 654 from aperture 694, whereupon the entire carrier assembly with both simplex cables clipped within may be easily pulled out from the tailgate assembly 690. Figures 22A and 22B show in partial section how simplex terminal carrier 650 appears in connection with the wall mounted tailgate assembly 501.

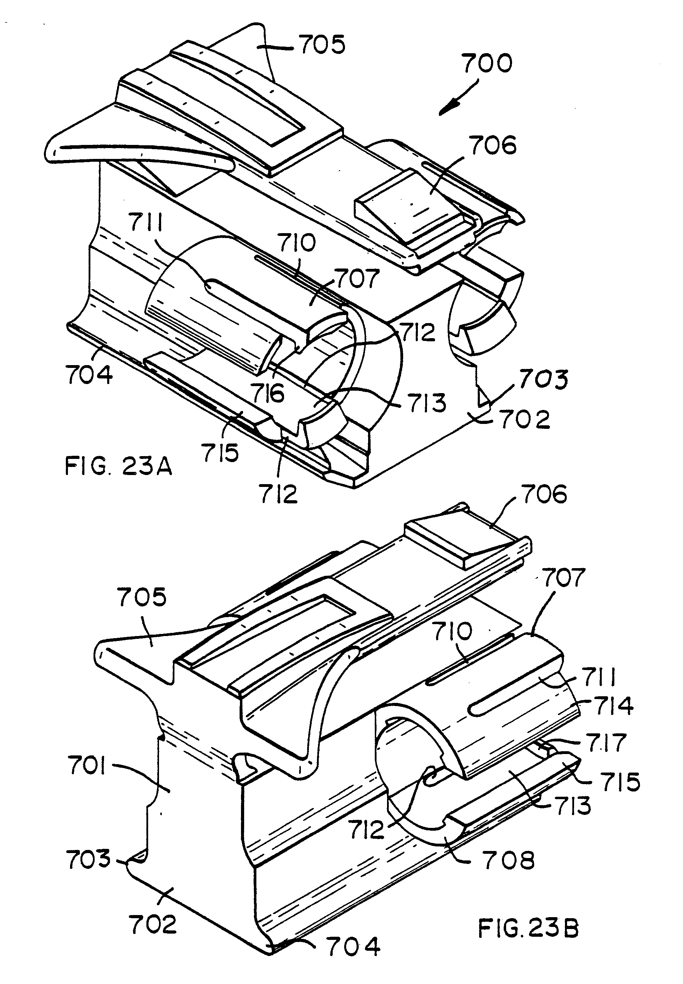

Figures 23A and 23B show perspective views of an alternative embodiment of a simplex terminal carrier. Such a carrier 700 has a body 701 which is provided with flat base 702 at which on either side extend flat straight flanges 703 and 704 respectively. At the top of body 701 is a latching arm 705 provided with a latching lug 706 at its distal end. On either side of body 701 is a clipping structure comprised of two parts 707 and 708, each having the general form of a partial hollow cylindrical surface. The portion 707 is provided with two partial cuts 710 and 711 which together provide it with increased flexibility. Likewise, the lower portion 708 is provided with comparable cuts 712 and 713 creating fingers 713 and 715 as best seen in Figure 23B. The portion between cuts 710 and 711 is provided at its end with a radially inwardly directed extension 716 and, similarly, the lower portion 708 between cuts 712 and 713 is provided with a like radially inwardly directed extension 717. As best seen in Figure 23B, extensions 716 and 717 have tapered forward ends that serve to act as ramps for a cylindrical simplex terminal pushed in from the front. When this is done, the radial flange at the forward end of each simplex terminal firmly and securely lodges immediately ahead of the ends of fingers 714 and 715 and behind extensions 716 and 717. Since these extensions 716 and 717 are somewhat forwardly displaced with respect to the ends of portions 714 and 717, there is thereby created a facility for introducing and clipping into place within each clipping arrangement, one on either side of body 701 of the simplex terminal carrier 700, a single simplex terminal ending in a ferrule suitable for insertion into a bushing such as 291 positioned on a toadstool support inside any one of the wall mounted interconnect tail gates described above. The user, therefore, may utilize simplex carrier 700 with two individual simplex cable terminals clipped into the clipping arrangements on either side for insertion into a tailgate assembly.

## Claims

1. A simplex fiber optic cable terminal carrier for carrying at least two simplex terminals (661,662) for the interconnection of fiber optics cables; characterized by; a body (650 or 701,702) on a substantially flat base; a forwardly cantilevered latching arm (653 or 705) attached to said body (650 or 701,702) and being provided with a forwardly tapered lug (654 or 706) at its distal end; and springy clip means (651,652, or 707, 708) attached to two opposite sides of the body (650 or 701,702) and being shaped and sized internally for firmly clipping therein simplex fiber optical terminals (661,662) terminating fiber ends in individual forwardly directed ferrules

2. A terminal carrier according to claim 1, characterized in that the latching arm (653 or 705) is attached to the top of the body (650 or 701,702).

3. A terminal carrier according to claim 1 or 2, characterized by flat, straight flanges (703 and 704) extending on either side of the base (702).

4. A terminal carrier according to claim 1, 2 or 3, characterized in that each of said springy clip means comprises two parts (707 and 708) each having the general form of a partial hollow cylindrical surface, and being provided with cuts (710,711,712,713) cooperating to enhance the flexibility of said parts (707and 708).

5. A terminal carrier according to claim 4, characterized in that said cuts define fingers (713,715).

6. A terminal carrier according to claim 4 or 5, characterized in that each of said parts (707 and 708) is provided between the cuts (710,711 or 712,713) therein with a forwardly positioned radially inwardly directed extension (716 or 717), having a tapered forward end acting as a ramp for a simplex terminal inserted from the front of the terminal carrier (700).

Fig.1

Fig.2

Fig. 3

Fig. 4

Fig. 5

EP 0 375 669 A2

_Fig. 6_

*Fig. 7*

*Fig. 8*

Fig. 9

_Fig. 10_

Fig. 11

EP 0 375 669 A2

FIG. 12A

FIG. 12B

FIG. 12C

FIG. 13

FIG. 14A

FIG. 14B

FIG. 14C

12

FIG. 16A

FIG. 15A

FIG. 15C

FIG. 15B

FIG.16B

FIG.16C

FIG.17A

FIG. 17C

FIG. 17B

FIG.18A

EP 0 375 669 A2

FIG. 19A

FIG. 18B

FIG. 19B

EP 0 375 669 A2

FIG. 20A

FIG.2IA

FIG.2IB

FIG. 2IC

FIG. 22A

EP 0 375 669 A2

FIG.20B

FIG.22B

FIG. 23A

FIG.23B